Europäisches Patentamt

European Patent Office

Office européen des brevets

(11) Publication number: **0 454 148 A2**

# EUROPEAN PATENT APPLICATION

(21) Application number: 91106800.5

(22) Date of filing: 26.04.91

(51) Int. Cl.⁵: **F16L 15/00**

(30) Priority: 27.04.90 US 516719

(43) Date of publication of application:
30.10.91 Bulletin 91/44

(84) Designated Contracting States:
AT BE CH DE DK ES FR GB GR IT LI LU NL SE

(71) Applicant: **BAKER HUGHES INCORPORATED**
**3900 Essex Lane Suite 1200**
**Houston Texas 77027(US)**

(72) Inventor: **DeLange, Richard Werner**
**1847 Willow Point**
**Kingwood, Texas 77339(US)**
Inventor: **Evans, Merle Edward**
**22714 Melham Lane**
**Spring, Texas 77373(US)**
Inventor: **Anderson, Donna Saunders**
**7202 Belle Glen**
**Houston, Texas 77072(US)**

(74) Representative: **Patentanwälte Grünecker,**
**Kinkeldey, Stockmair & Partner**
**Maximilianstrasse 58**
**W-8000 München 22(DE)**

(54) **Pipe joint.**

(57) A connector for flush or near-flush connectors for pipe casings is disclosed, featuring a square or near-square torque shoulder (within manufacturing tolerances and including a slight reverse angle or less than 5 degrees) located at the outermost area of the connector, which does not seal high external or internal pressures. An adjacent radial interference-fit seal is designed to seal against collapse pressure but not against high interstitial pressure within the box and pin threads. The connector is held together with a hooked thread form which maintains the mechanical integrity of the joint as interstitial pressure passes between the pin and box threads.

FIG. I

## FIELD OF THE INVENTION

The field or this invention relates to threaded joints for use predominantly in the oil and gas business.

## BACKGROUND Of THE INVENTION

The oil and gas industry is continuing to drill deeper and deeper for natural gas reserves. Going deeper means higher pressures and mechanical loads. It also means that wells must be constructed using larger and larger outside diameter casing so that when the total depth of the well is reached, the necessary inside diameter is achieved. One method used to minimize the amount of space the various casing strings take up is to use connectors that are is streamlined as possible.

These thin connectors have great clearance characteristics but lack the strength the more bulky coupled connectors possess. For this reason, failures occur more often with these flush or near-flush outside diameter connectors. Failures of this type can be extremely expensive. Recently, producers have been requiring very tough performance verification tests before approving designs for such deeper, environments. One of the more recent additions in the area of testing requires introduction of interstitial gas pressure between the pin and box ends, in combination with applied mechanical loads, such as tension and compression, to evaluate the ability of the connector to hold together without premature mechanical failure. The flush and near-flush connector designs currently available have a problem meeting the test because all of them incorporate an external torque shoulder generated by a "negative angle." A "negative angle" is one that reverses back toward the connector. These shoulders that use these "trapping angles" normally trap gas pressure inside the connector so effectively that the pressure builds to a level that is adequate to swell the box member enough so that it "jumps out" or comes off of the pin threads. Some of these connectors utilize "hooked threads" (where the crest overlaps the adjacent root), but even the locking type of threads are not adequate to hold the box and pin together on these thinner connectors having a negative shoulder angle when the pressure gets above a certain point.

One way to deal with this problem and still retain a reverse shoulder is disclosed in U.S. Patent 3,359,013. This patent shows an external torque shoulder that is frustoconical in shape (i.e., a reverse angle), with an adjacent taper, generally radial interference-fit seal. The threads are illustrated as normal truncated buttress type or nonhooked threads. This patent notes that problems of trapping gas can arise with reverse angle torque shoulders. These trapped gasses can cause a mechanical failure of the pin and box. As a solution, this patent teaches a means of defeating the sealing capability of the reverse angle torque shoulder by installing grooves across the shoulder for escape paths for the gas. The reference further teaches that grooves can also be added to the radial seal element to aid the gas in escaping. The seal grooves were never commercialized. It presents several difficulties in manufacturing and maintenance concerns it the grooves become damaged due to coupling and uncoupling of the joint.

U.S. Patent 1,927,656 shows a threaded joint which does not use the hooked thread design. The patent discloses an external shoulder with an adjacent slightly tapered seal. This reference teaches that gas passing through the threads undermines the joint, and the design proposed in U.S. Patent 1,927,656 claims to overcore the problem of joint failure due to gas passing through the threads by claiming that gas is excluded from the threads by design.

The apparatus of the present invention is designed to pass the more stringent tests recently developed for mechanical joints of this type. The design features a flat or perpendicular shoulder surface or one disposed at a greater angle from the longitudinal axis of the joint. It is understood that reference to a square shoulder incorporates machining tolerance. Thus, even a slight negative angle of less than 5 degrees will accomplish the desired objective. The shoulder surface allows gas pressure to escape outside of the connector before the pressure reaches such a level which is severe enough to cause the hooked threads to fail. The shoulder accomplishes some sealing due to the bearing pressure generated when the joint is torqued together. However, this bearing pressure on the shoulder is insufficient to seal against high pressures which may develop inside the joint, and the shoulder eventually allows the gas to leak into the annulus of the well.

Another feature of this invention is to maintain pressure integrity against pressure that can be present outside of the pipe connector (collapse pressure). The shoulder is not intended to seal against such pressure and, hence, the invention incorporates a sealing element disposed adjacent to the shoulder, with the seal being generated from two mating radially engaged surfaces, one on the pin and one on the box. Preferably, an interference fit is formed to obtain the seal, and the seal tightens as external pressure is applied against the outside of the box, which allots it to seal the collapse pressure rating of the pipe. At the same time, interstitial pressure between the threads can escape to the outside since this pressure cannot enhance the seal element as the external pressure can.

A desired feature of the invention is that the pin and the box are maintained in a position where they ore locked together by virtue of the use of the hooked threads. This allows interstitial pressure which migrates to between the pin and the box thread to escape before the integrity of the connector is jeopardized.

## SUMMARY OF THE INVENTION

A connector for flush or near-flush connectors for pipe casings is disclosed, featuring a square or near-square torque shoulder (within manufacturing tolerances and including a slight reverse angle of less than 5 degrees) located at the outermost area of the connector, which does not zeal high external or internal pressures. An adjacent radial interference-fit seal is designed to seal against collapse pressure but not against high interstitial pressure within the box and pin threads. The connector is held together with a hooked thread form which maintains the mechanical integrity of the joint as interstitial pressure passes between the pin and box threads.

## BRIEF DESCRIPTION OF THE DRAWINGS

Figure 1 is a sectional elevation view of the joint completely wide up.

Figure 2 is a more detailed view as shown in Figure 1, emphasizing the external shoulder and seal area of the joint.

Figure 3 is a more detailed view of the thread form illustrated in Figure 1.

## DETAILED DESCRIPTION OF THE PREFERRED EMBODIMENT

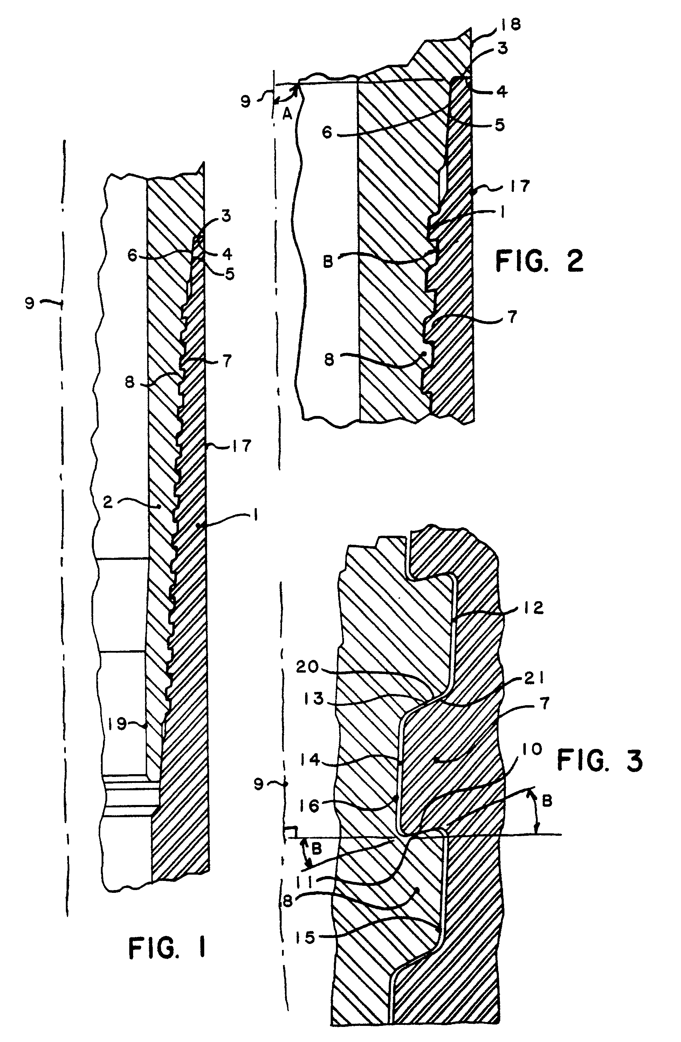

Referring to Figures 1 and 2, a box member 1 and a pin member 2 are machined onto pipe ends forming an axis 9. The pipes for oilfield use are typically threaded with a pin member on one end and a box member on the other end. When the joint is made up as shown in Figure 1, shoulder 4 on box 1 comes into contact with shoulder 3 on pin 2. A seal element 5 on the box 1 forms in interference fit with a seal element 6 on the pin 2. The interference fit between surfaces 5 and 6 forms a leak-tight seal against external fluid pressure.

Shoulder 4 on box 1 forms an angle A to the axis 9 of the connection between the box 1 and the pin 2. The preferred angle for angle A is 90 degree, but it may vary anywhere from 85 degrees from axis 9 to about 110 degrees. Even a slight reverse of loss than 5 degrees accomplishes the desired objective and sets the joint apart from the prior art. The shoulder 3 on pin 2 forms an angle to the axis 9 of the pipe that is appreciably the same or greater than angle A, which relates to the box shoulder 4. In practice, angle A must be less than the friction angle of the material of shoulders 3 and 4. If the angle A becomes greater, then additional screwing after the initial engagement of the shoulders 3 and 4 will tend to radially separate the seal surfaces S and 6, rendering them ineffective in sealing against external fluids. If the angle A becomes less than 85 degrees, then the shoulders 3 and 4 may seal against internal pressure passing into the thread gaps 12, 13 end 14 shown in Figure 3. A desirable feature in the joint of the present invention, which in particularly well suited to thin-walled, liner-type connections, is that the shoulders 3 and 4 do not form a seal against pressure in the thread gaps 12, 13 and 14.

The shoulders 3 and 4 form a seal against low pressure in the thread gaps. However, even a low pressure can cause the box 1 to swell radially outward from the pin 2. So to prevent this, threads 7 and 8 have load-bearing flanks 10 and 11 that form an angle B to a line formed perpendicular to the connection axis 9. Angle B can be greater than zero up to 25 degrees, but is usually in the range of 5-15 degrees. Any locking thread is acceptable, whether locking on one side or two. It can be seen in Figure 3 that angle B is oriented in the fashion such that the crest 15 overhangs the root 16 of the thread 8. This type of thread is referred to as a hooked thread. In the event fluid pressure appears in the thread gaps 12, 13 and 14, the hooked angle of the thread prevents the pin 2 and box 1 from separating until that pressure becomes great enough to be vented across the shoulders 3 and 4 and seal surfaces 5 and 6. The threads 7 and 8 can be machined either parallel to the axis 9 or may be tapered with respect to axis 9. The threads may be machined in such a way that two different sets of threads can be employed which are separated axially from each other and machined on different diameters forming a two-step thread. The two sets of threads may be machined either parallel to the axis 9 or tapered with respect to the axis 9, or a combination of one straight set and another tapered act. The roots 16 and crests 15 may be either parallel to the pipe axis or at the same taper angle of the threads or some other angle. The gaps 12, 13 and 14 may range from none, or an interference fit, to just touching or to a gap, as shown in Figure 3.

The sealing surfaces 5 and 6 are preferably tapered with respect to the axis 9, but can be parallel. The angle or surfaces 5 and 6 with respect to axis 9 can range between zero and 20 degrees or greater. Sealing surfaces 5 and 7 may be spherically shaped and not necessarily straight, or a combination of one surface being straight and one being slightly spherical. The axial length of the sealing surfaces 5 and 6 can vary greatly and still perform the desired function. The surface 6 of the pin seal is machined at a slightly greater diameter than the surface 5 of the box to form an interference fit between the two surfaces when the connection is assembled. The assembled pin 2 and box 1 can also feature an internal seal between them to assist in retaining internal pressure within the joint and to aid in preventing pressure within the joint from reaching the thread forms.

The invention can be applied to connections on pipes having plain ends where the box outside diameter 17 is the same as the pipe outside diameter 18, or on boxes on plain end pipes where the box connection outside diameter is slightly larger than the pipe outside diameter 18, or on connections threaded on pipes that have upset ends or on pipes that are threaded with pin connection on both ends and connected together with couplings that are threaded with a box connection on both ends. In this situation, the coupling outside diameter 17 may or may not be different from the pipe outside diameter 18. The invention can be used on pipes threaded with pin connections on both ends and connected together with couplings machined with box threads on both ends where the outside diameter 18 and the inside diameter 19 Nay not be the same as the pipe onto which the boxes are threaded.

The foregoing disclosure and description of the invention are illustrative and explanatory thereof, and various changes in the size, shape and materials, as well as in the details of the illustrated construction, may be made without departing from the spirit of the invention.

## Claims

1. A threaded pipe joint having a pin and box member, comprising:

   an external shoulder on the box disposed at an angle of it least 85 degrees from the longitudinal axis of the assembled pin and box;

   a shoulder disposed on the pin substantially parallel to said box shoulder and engaging said box shoulder on make-up of the joint;

   said pin and box formed having threads forms further comprising:

   a root;

   a crest;

   tension and compression flanks disposed on respective sides of each root and crest;

   said crests in part overhanging said roots;

   a pair of mating surfaces, one disposed on said pin and the other on said box, both surfaces respectively mounted between said shoulders end said thread forms when the pin is engaged to the box, said mating surfaces normally in engagement when the joint is made up, thereby forming a seal, at least portions of said mating surfaces selectively disengageable by interstitial pressure in said thread form, with said thread forms on said pin and box continuing to be engaged.

2. The apparatus of claim 1, wherein said mating surfaces are so disposed as to result in an increase in sealing pressure in response to pressure applied externally to the joint.

3. The apparatus of claim 2, wherein said shoulders are disposed at an angle between and including 90 degrees and 90 degrees plus the frictional angle of the pin and box material, as measured from the longitudinal axis of the joint.

4. The apparatus of claim 3, wherein said mating surfaces are disposed at on angle of zero to 20 degrees with respect to the longitudinal axis of the joint.

5. The apparatus of claim 4, wherein said mating surfaces are joined in an interference fit.

6. The apparatus of claim 5, wherein said mating surfaces are straight.

7. The apparatus of claim 5, wherein said mating surfaces are spherical.

8. The apparatus of claim 5, wherein one of said mating surfaces is straight and the other is spherical.

9. The apparatus of claim 5, wherein said thread forms are tapered with respect to said axis.

10. The apparatus of claim 5, wherein said thread forms are parallel with respect to said axis.

11. The apparatus of claim 5, wherein said thread forms are situated in the axially displaced positions.

12. The apparatus of claim 11, wherein said thread forms are tapered with respect to said axis.

13. The apparatus of claim 11, wherein said thread forms are parallel with respect to said axis.

14. The apparatus of claim 11, wherein one set of thread forms is parallel and the other is tapered with respect to said axis.

15. The apparatus of claim 9, wherein said roots and crests are disposed at the same angle as said thread form.

16. The apparatus of claim 9, wherein said roots and crests are at a different angle than said thread form.

17. The apparatus of claim 10, wherein said roots and crests are disposed at the sane angle as said thread form.

18. The apparatus of claim 10, wherein said roots and crests ore at a different angle than cold thread form.

19. The apparatus of claim 1, wherein the box and pin shoulders are disposed at an angle of at least 90 degrees from the longitudinal axis of the assembled pin and box.

20. The apparatus of claim 1, further comprising an internal seal between the box and pin.

21. The apparatus of claim 19, further comprising an internal seal between the box and pin.

.

FIG. 1

FIG. 2

FIG. 3